# EUROPEAN PATENT APPLICATION

(11) **EP 1 528 621 A1**
(43) Date of publication of application: **04.05.2005**
(21) Application number: 04256650.5
(22) Date of filing: 28.10.2004
(51) Int. Cl.: H01Q 1/22, H01Q 7/00, G06K 7/00

(54) **Loop coil antenna**

(30) Priority: 29.10.2003 JP 2003368192
(71) Applicant: Omron Corporation, Kyoto-shi, Kyoto 600-8530 (JP)
(72) Inventor: Kudo, Kazuhiro, c/o Omron Corporation IPD, Shimogyo-ku Koyoto (JP)
(74) Representative: Calderbank, Thomas Roger

(57) **Abstract**

This invention constructs an antenna matching circuit (16) able to avoid a bad influence when a conductor such as a metal, a tag, etc. approaches a reader/writer (11), and dissolves a communication defect area on the reader/writer side and stably maintains a communication distance.

In this invention, in a RFID system in which, when the tag corresponds to the generating area of a magnetic field generated in an antenna coil of the reader/writer (11), a radio wave for sending information to the reader/writer is outputted by operating a control circuit of the tag by electric power generated in an antenna coil of this corresponding tag, a conductor (17) is arranged near the antenna coil (15) of the reader/writer and an eddy current is intentionally flowed. Thus, the communication defect between the reader/writer and the tag approaching this reader/writer is reduced.

## Description

This invention relates to a RFID system (Radio Frequency IDentification System) for giving and taking information in noncontact by using an induced electromagnetic field between a reader/writer and a tag, and more particularly relates to a loop coil antenna able to simplify a circuit and an antenna in addition to the improvement of communication performance.

It is generally important to efficiently read authentication information recorded to the tag attached to e.g., an article to advance automatization using collation confirmation, etc. of the article and a device. A bar code corresponding to the authentication information is recorded to the tag and is read by a bar code reader to realize such reading.

However, it is necessary to relate constant distance and direction with high accuracy between the bar code information and the bar code reader so as to read the bar code information by using the bar code reader, which becomes an obstacle in the automatization and smoothing of the collation. Further, the information amount able to be inputted is small in the bar code information, and managing ability of the article is limited.

Therefore, in recent years, the RFID system for giving and taking information by wirelessly communicating the reader/writer side for genera ting the induced electromagnetic field and the noncontact RF tag (e.g., IC tag) used as a data carrier in noncontact is developed. If this RFID system is used, the distance and the direction between the reader/writer side and the noncontact RF tag are not restricted so much in the reading since the induced electromagnetic field is used at the reading time. Therefore, the authentication information recorded to this tag can be also reliably read from a separated position.

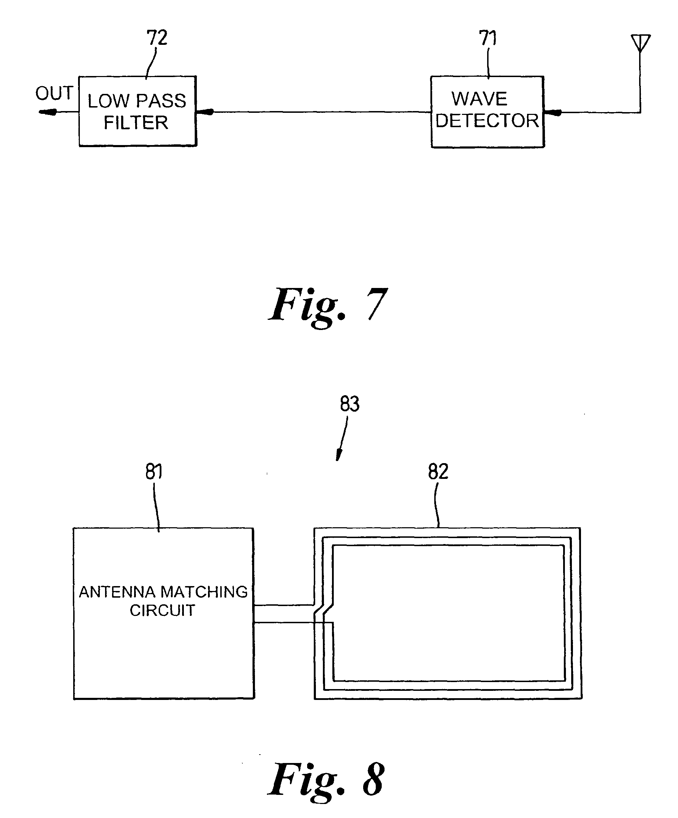

In this case, as shown in Fig. 8, the reader/writer side has a loop coil antenna 83 constructed by an antenna matching circuit 81 and an antenna coil 82. When a conductor such as a metal, etc. approaches this loop coil antenna 83, or when the tag approaches this loop coil antenna 83, the change of a coupling degree with the antenna coil 82 is increased. In this case, mismatching is generated in the antenna matching circuit 81. Therefore, there is a case in which a communication disability area is induced and the communication distance is reduced.

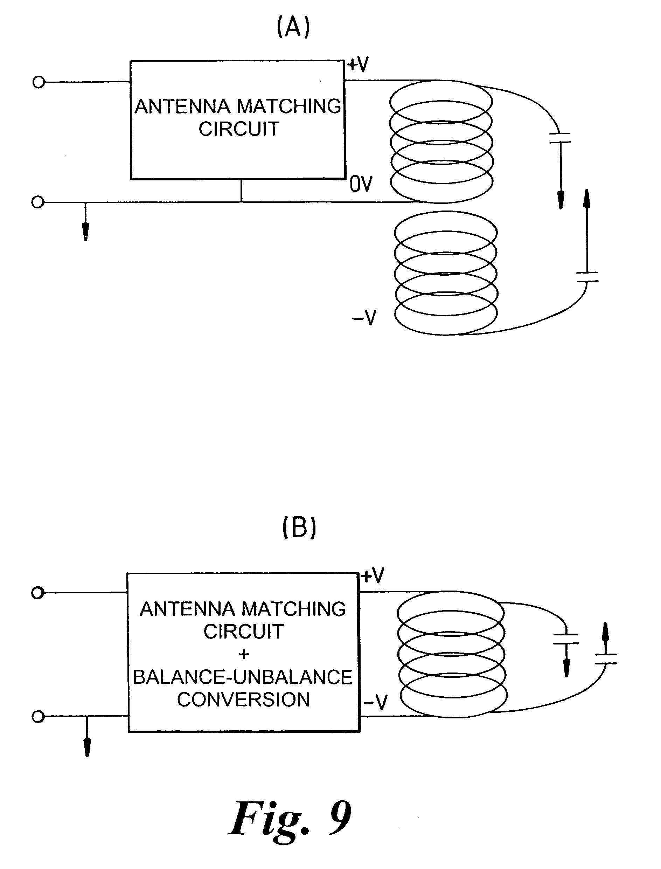

Further, for example, in the antenna matching circuit of the present RFID system, balance-unbalance conversion is performed in a compensating coil system used in the inspecting standard of ISO10373 as shown in Fig. 9A and the antenna matching circuit using a transformer, etc. shown in Fig. 9B to restrain a leak electric current from the antenna.

However, a problem exists in that the circuit and the antenna coil are complicated to use these antenna matching circuits.

Further, when a signal transmitting circuit and a signal receiving circuit arranged on the reader/writer side are constructed, the circuits also become complicated and cost is unavoidably increased to obtain a stable modulating signal.

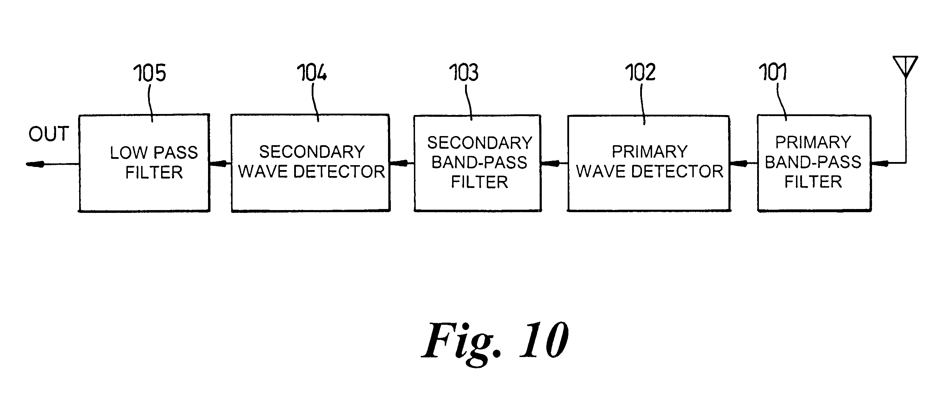

For example, when the signal receiving circuit is constructed, a primary band-pass filter 101, a primary wave detector 102, a secondary band-pass filter 103, a secondary wave detector 104 and a low pass filter 105 are arranged in this order as shown in Fig. 10. When the signal is modulated to a frequency of a subcarrier wave and is transmitted, information is demodulated by passing the information in this order. However, many constructions are required to demodulate the information by amplifying the frequency of the subcarrier wave so that the circuit becomes complicated and cost is increased.

In addition to this, an antenna device of the RFID system able to dissolve the defects of communication disability, etc. caused by approaching of the conductor such as a metal, etc. by adding a resonant frequency variable function to the antenna device is known (e.g., see JP-A-2001-344574).

However, in this case, when the coupling degree of the antenna device of the reader/writer and the tag or the conductor such as a metal, etc. approaching this antenna device from the exterior due to a distance change is strong, a problem exists in that a communication defect area such as near point missing and intermediate missing within the communication area is caused.

This invention is characterized in a loop coil antenna used in a RFID system in which, when a tag corresponds to the generating area of a magnetic field generated in an antenna coil of a reader/writer, a radio wave for sending information to the reader/writer is outputted by operating a control circuit of the tag by electric power generated in an antenna coil of this corresponding tag, wherein a conductor insulated from the antenna coil of the reader/writer is arranged in the interior surrounded by the antenna coil of the reader/writer.

Therefore, this invention may provide a loop coil antenna able to dissolve the communication defect area and stably maintain the communication distance by constructing the antenna matching circuit able to avoid the influence of the conductor and stabilizing this antenna matching circuit even when the conductor such as a metal, a tag, etc. approaches the reader/writer.

The above conductor may be constructed by a material having a magnetic property. For example, magnetic rubber, etc. constructed by mixing a ferromagnetic body of electrically conductive metallic plate and metallic foil, etc. or a rubber material and magnetic powder may be arranged along the antenna coil of the reader/writer.

When the relation of the above conductor and the tag is considered and the tag or the conductor such as a metal, etc. approaches the antenna coil of the reader/writer from the exterior and a separate conductor is arranged in advance near the antenna coil of the above reader/writer, an eddy current is generated around this separate conductor. Mismatching is generated in the antenna matching circuit by receiving the influence of the eddy current. Therefore, it is considered to set a construction for excluding the conductor as much as possible so as to avoid the mismatching near the antenna coil of the reader/writer.

Here, if the conductor insulated from the antenna of the reader/writer is positively arranged in the interior surrounded by the antenna coil of the reader/writer so as to intentionally flow the eddy current, it has been found that it is possible to restrain the influence degree at the time of coupling change of the antennas when the distance between the reader/writer and the tag is reduced.

Concretely, the changing amount of inductance is reduced by restraining the influence degree due to the coupling change of the antennas, and the changing amount of the antenna matching circuit is also reduced in proportion to this changing amount of inductance so that the mismatching can be reduced. As this result, even when the coupling degree of the antennas caused by the distance change of the reader/writer and the tag is strong, the generation of communication disability areas of near point missing and intermediate missing of the communication area and the reduction of the communication distance are prevented and stable communication can be secured.

Further, when the conductor is arranged in the interior surrounded by the antenna coil, this conductor can efficiently generate the eddy current between this conductor and the antenna coil of a loop shape in its outer circumference. Therefore, a preferable position relation suitable for the restraint of the coupling change of the antennas is set.

In this case, in the construction of the reader/writer, the reader/writer of a separating type for separating the loop coil antenna side having the conductor and the side of a driving circuit may be constructed. Further, the reader/writer of an integral type for integrating the antenna side and the driving circuit side may be also constructed. Thus, the reader/writer can be divisionally used in accordance with uses.

In accordance with this invention, when the tag approaches the reader/writer, or another conductor such as an electrically conductive metal, etc. approaches the reader/writer, the change of the coupling degree caused by the distance change at that time can be restrained. Therefore, an appropriate communication area can be secured and the communication distance can be maintained and the generation of the communication disability area can be prevented.

An inappropriate influence due to the change of the distance between the reader/writer and the tag is restrained by arranging the conductor near the antenna coil of the reader/writer and intentionally flowing the eddy current to this conductor.

### IN THE DRAWINGS

Fig. 1 is a perspective view showing a using state of a separating type reader/writer.
Fig. 2 is a perspective view showing one example of the reader/writer of an integral type.
Fig. 3 is a plan view of a main portion showing the arranging state of a metallic plate of the separating type reader/writer.
Fig. 4 is an electric circuit diagram showing an antenna matching circuit of the separating type reader/writer.
Fig. 5 is an electric circuit diagram showing a signal transmitting circuit of the separating type reader/writer.
Fig. 6 is a time chart showing the waveform of each signal of the signal transmitting circuit.
Fig. 7 is a block diagram of a main portion showing the construction of a signal receiving circuit.
Fig. 8 is a plan view of a main portion showing a conventional antenna matching circuit having no metallic plate and also showing an antenna coil.
Fig. 9 is an electric circuit diagram showing each conventional antenna matching circuit.
Fig. 10 is a block diagram of a main portion showing the construction of a conventional signal receiving circuit.

One embodiment of this invention will next be explained on the basis of the drawings.

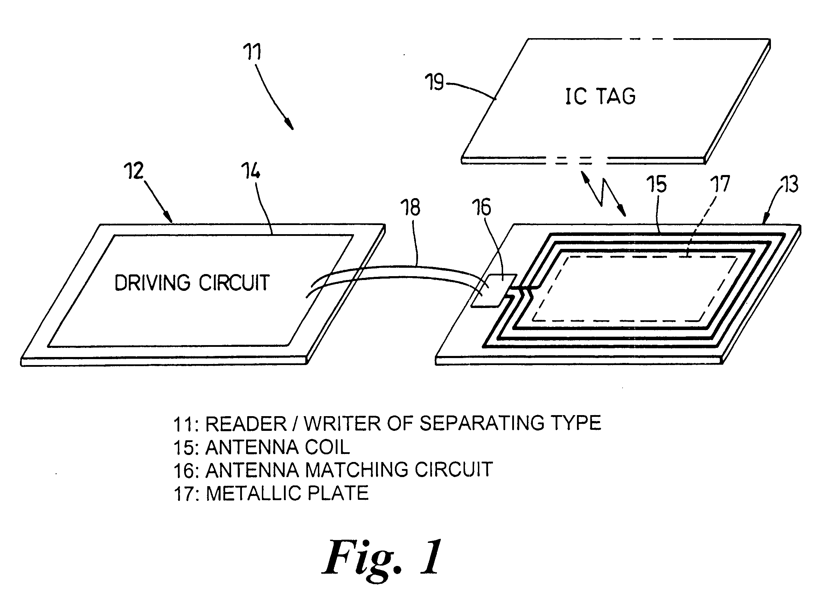

Fig. 1 shows a reader/writer of a separating type used in the RFID system. In Fig. 1, this reader/writer 11 of the separating type is arranged by separating one reader/writer substrate 12 using a resin material of a non-electrically-conductive property and the other antenna substrate 13 similarly using a resin material of a non-electrically-conductive property.

A driving circuit 14 for reading and writing information is mounted to the one reader/writer substrate 12. An antenna coil 15 constructed as a loop coil antenna, an antenna matching circuit 16 and an electrically conductive metallic plate 17 are mounted and arranged in the other antenna substrate 13. Wiring 18 is connected between the reader/writer substrate 12 and the antenna substrate 13.

When a magnetic field is generated in the antenna coil 15 from the above reader/writer 11 and an IC tag 19 approaching from the exterior enters this magnetic field generating area, an unillustrated control circuit of the IC tag 19 is operated by electric power generated in an antenna coil of the IC tag 19 within this area and information is given and taken by communicating with the above reader-writer 11 side.

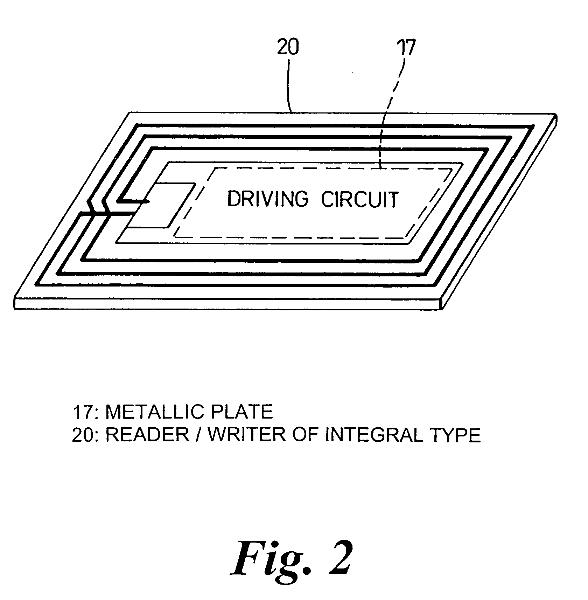

In the above reader/writer substrate 12 and the above antenna substrate 13 separated from each other, the two substrates of the resin material of the non-electrically-conductive property on the reader/writer substrate 12 side and the antenna substrate 13 side may be also vertically overlapped and integrally arranged in addition to the separating arrangement. Further, a mounting part may be also assembled and arranged in one substrate of the resin material of the non-electrically-conductive property, and can be also arranged in the reader/writer 20 of an integral type integrated as a simplex as shown in e.g., Fig. 2.

The above metallic plate 17 may be a conductor able to generate an eddy current, and uses e.g., a metallic plate and a metallic foil. For example, the metallic plate 17 is mounted to the central portion surrounded by the antenna coil 15 of a loop shape along a rectangular shape of the antenna substrate 13 having the rectangular shape in this rectangular shape, or is buried and integrally attached to the central portion.

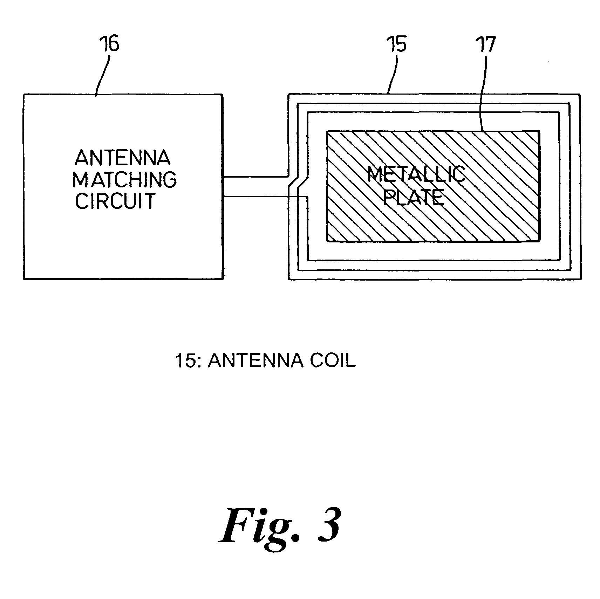

Fig. 3 shows the arranging relation of the abovemetallic plate 17 and the antenna coil 15. The metallic plate 17 of the same rectangular shape is arranged in the position of the interior surrounded by the antenna coil 15 arranged in the loop shape of the same rectangular shape as the resin substrate of the rectangular shape. When the metallic plate 17 is arranged in this way, the metallic plate 17 can efficiently generate the eddy current on the external surface of the metallic plate 17 by receiving the influence of a magnetic field generated from the antenna coil 15. Therefore, in attachment of the metallic plate 17, the position relation of the interior surrounded by the antenna coil 15 is suitable.

In this case, an influence degree due to a coupling change of the antennas at an approaching time of the distance between the reader/writer 11 and the tag 19 can be restrained by positively arranging the metallic plate 17 and intentionally flowing the eddy current to this metallic plate 17. The changing amount of an inductance component of the antenna coil 15 is reduced by this restraining action, and the changing amount of the antenna matching circuit is also reduced in proportion to this changing amount of the inductance component so that mismatching can be reduced. As this result, even when the coupling degree of the antennas caused by the distance change of the reader/writer and the tag is strong, it is possible to prevent the generation of communication disability areas of near point missing and intermediate missing within the communication area and a reduction in communication distance.

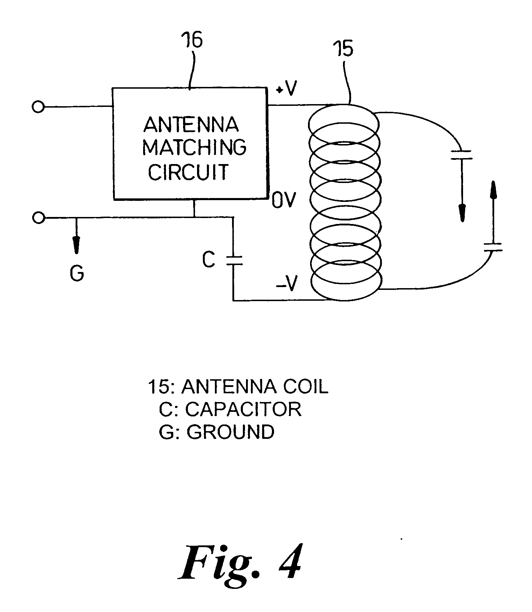

Fig. 4 shows a circuit diagram of the antenna matching circuit 16 and the antenna coil 15 arranged in the antenna substrate 13 of the reader/writer 11. This circuit is constructed by interposing a capacitor C for balance-unbalance conversion between the antenna coil 15 and the ground G.

In this case, the balance-unbalance conversion of the antenna coil 15 on the reader/writer 11 side can be performed and a leak electric current from the antenna coil 15 is restrained by interposing only one capacitor C between the antenna coil 15 and the ground G. Therefore, the balance-unbalance conversion can be realized without requiring a complicated circuit and a complicated coil. Accordingly, if such a circuit is constructed, common mode noises, unnecessary radiation, etc. can be reduced in addition to the reduction in the leak electric current although it is a simple circuit construction.

In particular, since the original coil can be used as an inductance value of about twice and the antenna coil electric current can be reduced to half without changing the original coil, etc., the restriction can be reduced when the reader/writer 11 is compactly manufactured.

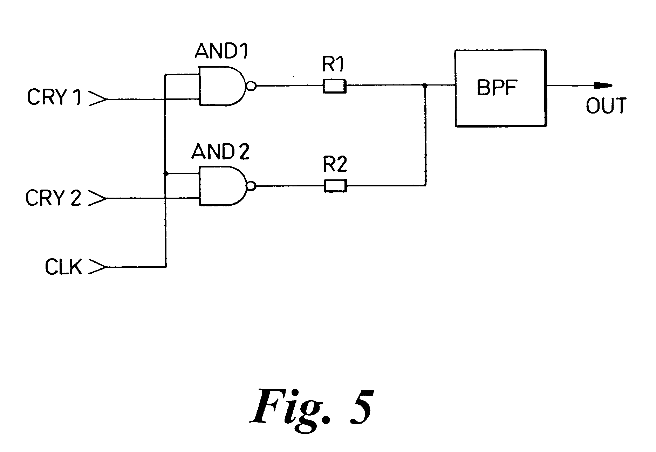

Fig. 5 shows a signal transmitting circuit of the reader/writer 11. This signal transmitting circuit is constructed as shown in Fig. 5 by sequentially connecting logic product circuits AND1, AND2 connected to the terminals of inputted control signals CRY1, CRY2 and clock signal CLK, resistors R1, R2 and a band-pass filter BPF. When the control signals CRY1, CRY2 are inputted, rectangular waves of these control signals CRY1, CRY2 are read out by taking input timing by the clock signal CLK and the logic product circuits AND1, AND2. These read rectangular waves are divided in resistance by the resistors R1, R2 and then pass through the band-pass filter BPF.

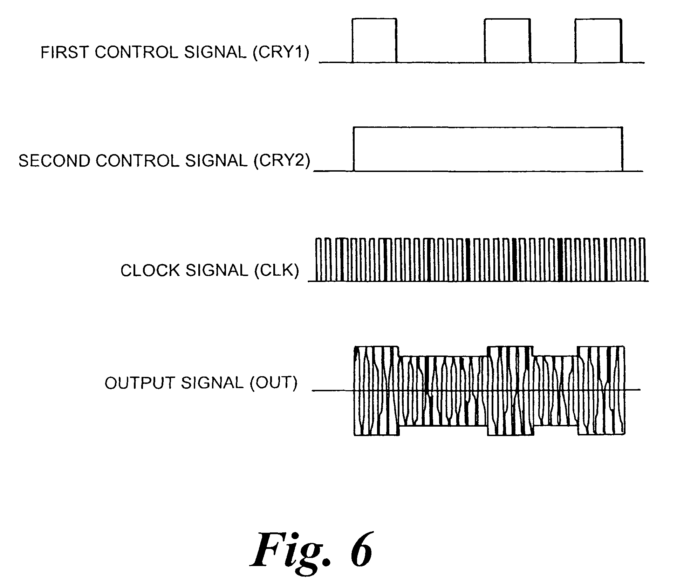

Thus, as shown by the time chart of Fig. 6, a stable amplitude modulating signal (ASK signal) hardly influenced by delay, etc. is generated. Since such a stable amplitude modulating signal can be generated, the stable modulating signal can be outputted from the signal transmitting circuit. Further, if such a signal transmitting circuit is used, the circuit can be simply constructed so that the circuit can be manufactured at low cost.

Fig. 7 shows a signal receiving circuit of the reader/writer 11. This signal receiving circuit is constructed as shown in Fig. 7 by sequentially connecting a wave detector 71 and a low pass filter 72. When information is modulated to a frequency of a subcarrier wave and is transmitted by this signal receiving circuit, this information is modulated by passing this information through the wave detector 71 and the low pass filter 72.

In this case, since the information can be modulated to the frequency of the subcarrier wave by the wave detector 71 and the low pass filter 72 and can be received, it is possible to construct a simple signal receiving circuit in which plural band-pass filters and secondary wave detection are omitted. Accordingly, the number of parts is reduced and the signal receiving circuit is simplified and can be manufactured at low cost. If such a signal receiving circuit is used, the distance between the reader/writer 11 and the tag 19 is reduced. Accordingly, even in a high coupling state of the antennas, the information can be easily demodulated without amplifying the frequency of the subcarrier wave.

A using state of the reader/writer 11 of the separating type constructed in this way will next be explained. When the IC tag 19 approaches the antenna substrate 13 side of this reader/writer 11 of the separating type and enters a communication area formed in a space toward a certain direction outputted from the antenna coil 15 of this antenna substrate 13 side, the IC tag 19 outputs a radio wave for sending information to the reader/writer 11 side by operating the control circuit of this IC tag 19 by electric power generated in the antenna coil of this IC tag 19 on the basis of this entering, and information is given and taken between this IC tag 19 and the reader/writer 11.

In this case, when the distance between the reader/writer 11 side and the IC tag 19 side is reduced, an eddy current is generated in the metallic plate 17 arranged on the reader/writer 11 side. Therefore, the changing amount of inductance is reduced by this metallic plate 17 in the antenna coil 15 of the reader/writer 11 side. The changing amount of the antenna matching circuit 16 is also reduced in proportion to this changing amount of inductance. Therefore, the influence degree due to the coupling change of both the antennal coils of the reader/writer 11 side and the IC tag 19 side is restrained. Accordingly, it is possible to secure stable matching and maintain communication performance of high reliability with the IC tag 19.

As mentioned above, it is possible to secure the communication performance of high reliability by only arranging the metallic plate within the antenna coil of the reader/writer side as one means for dissolving the mismatching of the antennas due to the change in the distance between the reader/writer side and the IC tag side.

In the correspondence of this invention and the construction of the above one embodiment, the construction of this invention corresponds to the construction of the embodiment, but this invention can be applied on the basis of the technical ideas shown in the claims. Accordingly, this invention is not limited to only the construction of the above one embodiment. For example, in the above embodiment, the reader/writer 11 of the separating type has been explained as an example, but no reader/writer 11 is limited to the separatingtype. Similar operation effects are also obtained when the reader/writer 20 of the integral type is used.

## Claims

1. A loop coil antenna used in a RFID system in which, when a tag corresponds to the generating area of a magnetic field generated in an antenna coil of a reader/writer, a radio wave for sending information to said reader/writer is outputted by operating a control circuit of the tag by electric power generated in an antenna coil of this corresponding tag,
wherein a conductor insulated from the antenna coil of the reader/writer is arranged in the interior surrounded by the antenna coil of said reader/writer.

2. The loop coil antenna according to claim 1, wherein said conductor is constructed by a metallic plate buried in the interior surrounded by the antenna coil of the reader/writer approximately without any clearance.
